# DEMANDE DE BREVET EUROPEEN

(11) **EP 1 449 749 A1**
(43) Date de publication de la demande: **25.08.2004**
(21) Numéro de dépôt: 04290381.5
(22) Date de dépôt: 12.02.2004
(51) Int. Cl.: B62D 25/16

(54) **Support d'aile de véhicule automobile**

(30) Priorité: 12.02.2003 FR 0301682
(71) Demandeur: COMPAGNIE PLASTIC OMNIUM, 69007 Lyon (FR)
(72) Inventeur: Roux, Jean-Pierre, 69400 Villefranche sur Saone (FR); Fayt, Arnold, 06140 Jujurieux (FR); Cheron, Hugues, 01800 Meximieux (FR)
(74) Mandataire: de la Bigne, Guillaume Michel Marie

(57) **Abrégé**

Support d'aile de véhicule automobile, ledit support comportant une partie inférieure destinée à être fixée sur au moins une pièce rigide d'un châssis du véhicule, et une partie supérieure, éloignée de la partie inférieure, destinée à supporter un bord supérieur (2) d'une aile (1) ayant une face externe visible de l'extérieur du véhicule et une face interne opposée à la face externe, le support étant conformé de manière à maintenir éloigné le bord supérieur de l'aile et la pièce rigide de châssis la plus proche de ce bord. Le support comporte des plages de soutien (8) dont chacune épouse sensiblement la forme de la face interne de l'aile au voisinage de son bord supérieur, les plages de soutien étant espacées les unes des autres mais formant ensemble une nappe de soutien

## Description

La présente invention concerne un support d'aile de véhicule automobile.

On sait qu'une aile de véhicule automobile est montée sur le châssis de ce véhicule à l'aide de fixations qui peuvent être glissantes ou non, mais qui sont, en général, rigides, afin de garantir un positionnement précis de l'aile par rapport aux pièces de carrosserie environnantes.

De telles fixations rigides présentent l'inconvénient que l'aile ne peut réagir de façon appropriée en cas de choc tête, c'est-à-dire en cas d'impact de la tête d'un piéton, adulte ou enfant, sur le bord supérieur de l'aile, à moins que l'aile présente en elle-même une élasticité suffisante pour absorber l'énergie du choc.

La présente invention vise à proposer un support d'aile qui, non seulement assure la fixation et le positionnement précis de l'aile sur le châssis du véhicule mais, en outre, est capable de traiter un choc tête.

La présente invention a pour objet un support d'aile de véhicule automobile, ledit support comportant une partie inférieure destinée à être fixée sur au moins une pièce rigide d'un châssis du véhicule, et une partie supérieure, éloignée de la partie inférieure, destinée à supporter un bord supérieur d'une aile ayant une face externe visible de l'extérieur du véhicule et une face interne opposée à la face externe, caractérisé en ce que le support est conformé de manière à maintenir éloigné le bord supérieur de l'aile et la pièce rigide de châssis la plus proche de ce bord, et en ce qu'il comporte des plages de soutien dont chacune épouse sensiblement la forme de la face interne de l'aile au voisinage de son bord supérieur, les plages de soutien étant espacées les unes des autres mais formant ensemble une nappe de soutien.

La pièce rigide de châssis peut être constituée par une doublure d'aile parfois désignée longeron supérieur ou un longeron. La pièce du châssis la plus proche du bord supérieur de l'aile est en général la doublure d'aile.

De préférence, la distance entre deux plages de soutien adjacentes est, au maximum, d'environ une demi-largeur de tête.

La mesure considérée en tant que largeur de tête est, de préférence, une largeur de tête d'enfant, soit environ 130 mm.

L'invention présente l'originalité que la nappe de soutien, qui est constituée par les plages de soutien, peut s'étendre sur une grande longueur de manière à répartir l'effort à supporter en cas de choc.

En particulier, selon un mode de réalisation de l'invention, la nappe de soutien s'étend sur toute la longueur du bord supérieur de l'aile.

Toutefois, cette nappe assure un soutien continu du bord supérieur de l'aile mais présente une structure discontinue, puisque constituée de plages de soutien espacées les unes des autres.

Il en résulte une économie de matière, et donc de poids.

Dans un mode de réalisation particulier de l'invention, les plages de soutien sont supportées par un socle comportant une partie déformable et une partie fusible.

La partie déformable permet l'absorption de l'énergie des chocs de faible énergie et procure une première décélération en cas de choc à haute énergie.

La partie fusible est sollicitée lorsque l'absorption d'énergie résultant de la déformation ne suffit pas à absorber toute l'énergie du choc. Dans ce cas, l'invention procure un avantage économique du fait qu'à la suite d'un choc, la réparation du véhicule peut être effectuée uniquement en remplaçant le support d'aile selon l'invention, l'aile ayant été préservée.

L'homme du métier saura adapter la forme du support d'aile selon l'invention pour programmer sa déformation et sa rupture dans des conditions optimales de décélération progressive de la tête d'un piéton venant impacter l'aile.

Dans une variante particulière, la partie déformable et la partie fusible du socle sont confondues en une partie unique en forme de marche d'escalier dans laquelle des amorces de rupture sont réalisées.

Dans un mode de réalisation particulier de l'invention, les plages de soutien se prolongent par une gorge de réception pour le rebord dirigé vers l'intérieur d'une aile.

Cette gorge est, de préférence, munie de clips de fixation permettant de retenir le rebord de l'aile.

Grâce à cette configuration, on peut, très facilement et très rapidement positionner l'aile sur le châssis du véhicule par simple insertion de son rebord supérieur dans la gorge.

Le support d'aile selon l'invention peut être réalisé en thermoplastique, éventuellement chargé de fibres de verre, ou en hybride métal-thermoplastique, ou encore en thermodur.

Un intérêt du support d'aile selon l'invention est que sa relative souplesse lui permet de prendre en compte des dilatations de l'aile.

Afin de faciliter la compréhension de l'invention, on va maintenant en décrire un mode de réalisation à l'aide des dessins annexés, dans lesquels :
- la figure 1 est une vue en perspective de l'intérieur d'une aile avant d'un véhicule automobile et de sa réglette support ;
- la figure 2 est une vue en perspective de l'extérieur de l'aile et de sa réglette support.

L'aile 1 représentée sur le dessin comprend, le long de son bord supérieur 2, un rebord 3 sensiblement vertical dirigé vers le bas, qui est formé d'un seul tenant avec sa peau.

Une réglette 4 en matériau thermoplastique formant un support pour l'aile 1, est destinée à être assujettie à au moins une pièce rigide du châssis du véhicule, qui peut ici être constitué par une doublure d'aile (non représentée).

La réglette comprend un socle présentant une section générale en L dont la branche inférieure 5 s'applique contre la doublure d'aile et dont la branche supérieure verticale 6 se termine par une gorge 7 de réception du rebord de l'aile, cette gorge 7 étant éloignée verticalement de la branche inférieure 5.

Cette gorge est formée par deux parois verticales, dont l'une est évasée pour faciliter l'introduction du rebord.

La réglette est conformée de manière à maintenir éloigné le bord supérieur 2 de l'aile 1 et la pièce rigide de châssis la plus proche de ce bord.

Des plages de soutien 8 prolongent le socle en formant une nappe de soutien inclinée dont l'enveloppe correspond sensiblement à la forme de la face inférieure de l'aile. Cette nappe de soutien s'applique contre l'aile lorsque cette dernière est fixée à la réglette par son rebord introduit dans la gorge.

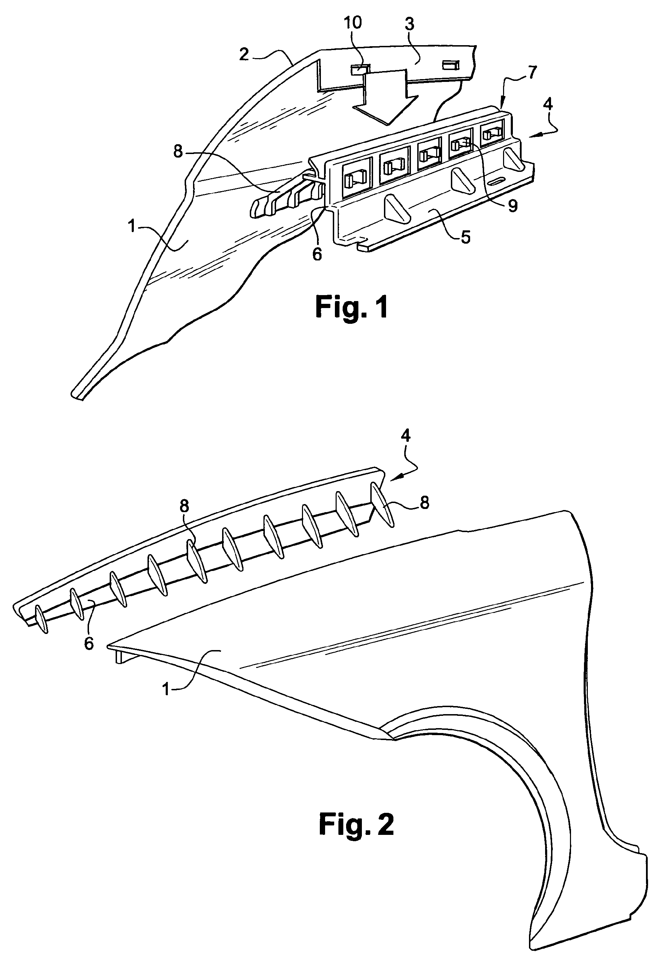

Les plages de soutien, comme on le voit sur la Figure 2, sont espacées les unes des autres d'un pas d'environ 65 centimètres.

Cet espacement permet de réaliser un compromis entre la recherche d'un poids minimal de la réglette et une efficacité maximale de la fonction de soutien continu de tout le bord supérieur de l'aile.

La Figure 1 montre des clips 9 formés dans la branche verticale supérieure du socle et faisant saillie à l'intérieur de la gorge. Ces clips coopèrent avec des ouvertures 10 ménagées dans le rebord vertical de l'aile, afin d'assurer la fixation de cette dernière sur la réglette.

Les dilatations de l'aile selon la direction longitudinale du véhicule sont tolérées grâce à des orifices oblongs de fixation du socle sur le châssis, comme cela est connu.

Pour renforcer le socle, des inserts métalliques peuvent être prévus dans sa branche inférieure 5 fixée au châssis.

Le mode de réalisation décrit ci-dessus ne présente aucun caractère limitatif.

## Revendications

1. Support (4) d'aile de véhicule automobile, ledit support comportant une partie inférieure destinée à être fixée sur au moins une pièce rigide d'un châssis du véhicule, et une partie supérieure, éloignée de la partie inférieure, destinée à supporter un bord supérieur (2) d'une aile (1) ayant une face externe visible de l'extérieur du véhicule et une face interne opposée à la face externe, **caractérisé en ce que** le support est conformé de manière à maintenir éloigné le bord supérieur de l'aile et la pièce rigide de châssis la plus proche de ce bord, et **en ce qu'**il comporte des plages de soutien (8) dont chacune épouse sensiblement la forme de la face interne de l'aile au voisinage de son bord supérieur, les plages de soutien étant espacées les unes des autres mais formant ensemble une nappe de soutien.

2. Support selon la revendication 1, dans lequel la distance entre deux plages de soutien (8) adjacentes est, au maximum, d'environ une demi-largeur de tête.

3. Support selon la revendication 2, dans lequel la mesure considérée en tant que largeur de tête est une largeur de tête d'enfant, soit environ 130 mm.

4. Support d'aile selon l'une des revendications 1 à 3, dans le lequel la nappe de soutien s'étend sur toute la longueur du bord supérieur (2) de l'aile.

5. Support selon l'une des revendications 1 à 4, dans lequel les plages de soutien sont supportées par un socle comportant une partie déformable et une partie fusible.

6. Support d'aile selon la revendication 5, dans lequel la partie déformable et la partie fusible du socle sont confondues en une partie unique en forme de marche d'escalier dans laquelle des amorces de rupture sont réalisées.

7. Support d'aile selon l'une des revendications 1 à 6, dans lequel les plages de soutien se prolongent par une gorge (7) de réception pour le rebord (3) dirigé vers l'intérieur d'une aile.

8. Support d'aile selon la revendication 7, dans lequel la gorge (7) est munie de clips (9) de fixation permettant de retenir le rebord de l'aile.
